(19) Europäisches Patentamt

European Patent Office

Office européen des brevets

(11) **EP 1 640 605 A1**

(12) **EUROPEAN PATENT APPLICATION**
published in accordance with Art. 158(3) EPC

(43) Date of publication:
**29.03.2006 Bulletin 2006/13**

(51) Int Cl.:
*F03D 1/04* [(1968.09)]

(21) Application number: **03736174.8**

(86) International application number:
**PCT/JP2003/007474**

(22) Date of filing: **12.06.2003**

(87) International publication number:
**WO 2004/111444 (23.12.2004 Gazette 2004/52)**

(84) Designated Contracting States:
**DE FR GB SE**

(71) Applicant: **Ryukyu Electric Power Co., Ltd.
Naha-shi,
Okinawa 901-0147 (JP)**

(72) Inventors:
• **BABA, Yoshimi
Kanagawa 222-0031 (JP)**

• **TAMAKI, Shiro,
Ryukyu University
Okinawa 903-0213 (JP)**

(74) Representative: **Calderbank, Thomas Roger et al
MEWBURN ELLIS
York House
23 Kingsway
London WC2B 6HP (GB)**

(54) **WIND POWER GENERATOR**

(57)     The invention provides a wind power generator which can further improve a power generating efficiency. The wind power generator in accordance with the present invention is provided with an approximately cylindrical duct (10) with the side section thereof having a wing-like shape, an impeller (30) constructing a front end portion of a streamlined pencil body (20) coaxially installed with the duct and capable of rotating by a force of wind flowing in an inner portion of the duct (10), and a power generator (40) converting a rotational energy of the impeller (30) into an electric energy. A maximum wing thickness position (108) is positioned nearer a leading edge(102) than a center of a chord (106) in the side cross-sectional wing-like shape of the duct (10). Further, the chord (106) is tilted with respect to a duct axis in such a manner that an outer diameter of the duct (10) is made approximately uniform at least in a rear portion of the duct. The pencil body (20) is installed such that a front end portion is positioned in a rear side of a front end portion of the duct (10) and a rear end portion is positioned in a front side of a rear end portion of the duct (10). Further, a ratio of a maximum outer diameter (R2) of the duct (10) with respect to a minimum inner diameter (R1) of the duct (10) is within a range between 2.0 and 4.3.

FIG.1

EP 1 640 605 A1

## Description

Technical Field

The present invention relates to a wind power generator provided with an approximately cylindrical duct with the side cross-section thereof having a wing-like shape, a streamlined pencil body coaxially installed with the duct, an impeller constituting a part of the pencil body and capable of rotating about a duct axis in an inner portion of the duct by a force of wind flowing in the inner portion of the duct, and a power generator converting a rotational energy of the impeller into an electric energy.

Background Art

Conventionally, in order to improve a power generating efficiency by a wind power generator provided with a duct and an impeller installed within the duct, there have been proposed some methods (refer to Japanese Unexamined Patent Publication No. 2003-28043 and EP 0045202 A1).

However, the inventor of the present application has known that there is room for improvement in the power generating efficiency, on the basis of a study of an air current near the wind power generator.

Accordingly, a solving problem of the present invention is to provide a wind power generator which can further improve a power generating efficiency.

Disclosure of the Invention

The present invention relates to a wind power generator provided with an approximately cylindrical duct with the side cross-section thereof having a wing-like shape, a streamlined pencil body coaxially installed with the duct, an impeller constituting a part of the pencil body and capable of rotating about a duct axis in an inner portion of the duct by a force of wind flowing in the inner portion of the duct, and a power generator converting a rotational energy of the impeller into an electric energy.

In order to solve the problem mentioned above, in accordance with the present invention, there is provided a wind power generator, wherein a maximum wing thickness position is positioned nearer a leading edge than a center of a chord in the side cross-sectional wing-like shape of the duct, an opening diameter of a front end of the duct is made smaller than an opening diameter of a rear end, an outer diameter of the duct is made approximately uniform at least at a rear portion of the duct, the pencil body is installed such that a front end portion is positioned rearward from a front end portion of the duct and a rear end portion is positioned forward from a rear end portion of the duct, and a ratio of a maximum outer diameter of the duct with respect to a minimum inner diameter of the duct is within a range between 2.0 and 4.3.

In accordance with the present invention, owing to the wing-like shape of the side cross-section of the duct, in the case that the wind flows to the rear side from the front side of the duct, it is possible to generate "pressure reduction region" while inhibiting a vortex from being generated from the rear portion of the duct toward a rear side. Further, it is possible to increase a wind speed in the inner portion of the duct on the basis of a wind drawing in the pressure reduction region while solving a drawback that the wind flow from the front side of the duct to the inner portion of the duct is prevented by the vortex in the rear side of the duct.

Further, since the leading end portion of the pressure reduction region is attracted to the rear end portion of the pencil body, it is possible to inhibit a stagger at the front end portion of the pressure reduction region. Further, it is possible to inhibit a drawback that the pressure reduction region disappears on the basis of the stagger at the front end portion of the pressure reduction region, during a period where the wind blows from the front side of the duct toward the rear side. Further, it is possible to steadily maintain the pressure reduction region at the rear side of the duct, and it is possible to secure an increase of the wind speed in the inner portion of the duct.

Therefore, in accordance with the wind power generator of the present invention, it is possible to further improve the power generating efficiency by increasing the wind speed in the inner portion of the duct on the basis of the generation of the pressure reduction region in the rear side of the duct, and by steadily maintaining the pressure reduction region on the basis of the inhibition of the stagger in the front end portion of the pressure reduction region.

Further, in accordance with the present invention, there is provided a wind power generator, wherein the wind power generator is provided with an approximately annular flap plate protruding in an outer diameter direction of the duct from the rear end portion of the duct, and a ratio of a width of the flap plate with respect to the rear end radius of the duct is within a range between 0.020 and 0.15.

In accordance with the present invention, it is possible to inhibit a collision in the rear side of the duct between the wind in the inner side of the duct (hereinafter referred to as "inside wind"), and the wind in the outer side of the duct (hereinafter referred to as "outside wind"), by the flap plate. Accordingly, it is possible to inhibit a drawback that the flow of the inside wind is disturbed by an irregular flow of the outside wind, and the pressure reduction region generated from the rear portion of the duct towards the rear side disappears, whereby the power generating efficiency is lowered.

Further, in accordance with the present invention, there is provided a wind power generator, wherein the wind power generator is provided with a wind direction measuring means for measuring a wind direction, and a duct slope control means for controlling such that an angle of slope of a duct axis with respect to the wind direction measured by the wind direction measuring means becomes equal to or less than 10 degree.

In accordance with the present invention, the wind direction is measured by the wind direction measuring means. Further, the control is executed by the duct slope control means such that the angle of slope of the duct axis with respect to the measured wind direction becomes equal to or less than 10 degree.

The inventor of the present application has found that the power generating efficiency is significantly lowered if the angle of slope of the duct axis with respect to the wind direction exceeds 10 degree. Therefore, in accordance with the present invention, it is possible to improve the power generating efficiency on the basis of the control of the angle of slope of the duct axis with respect to the wind direction.

Further, in accordance with the present invention, there is provided a wind power generator, wherein a vane of the impeller is formed by cutting an approximate oval approximately in parallel to a short axis into a shape which is shortened from an end in a long axial direction, and a ratio of a length in the long axial direction of the vane with respect to a long diameter of the approximate oval is within a range between 0.82 and 0.87.

The inventor of the present application has found that the power generating efficiency is increased by forming the vane of the impeller in the shape mentioned above. Therefore, in accordance with the present invention, it is possible to improve the power generating efficiency by devising the shape of the vane of the impeller.

Brief Description of the Drawings

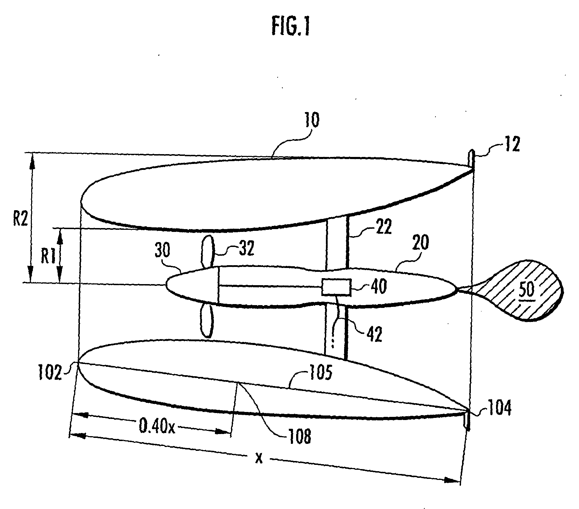

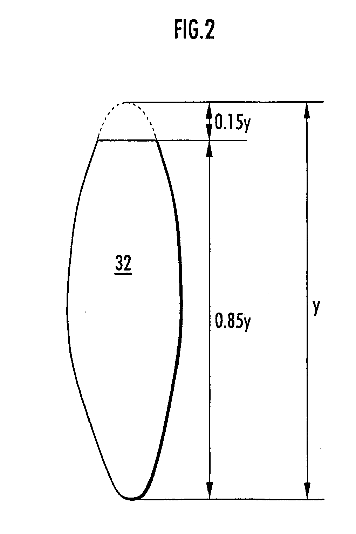

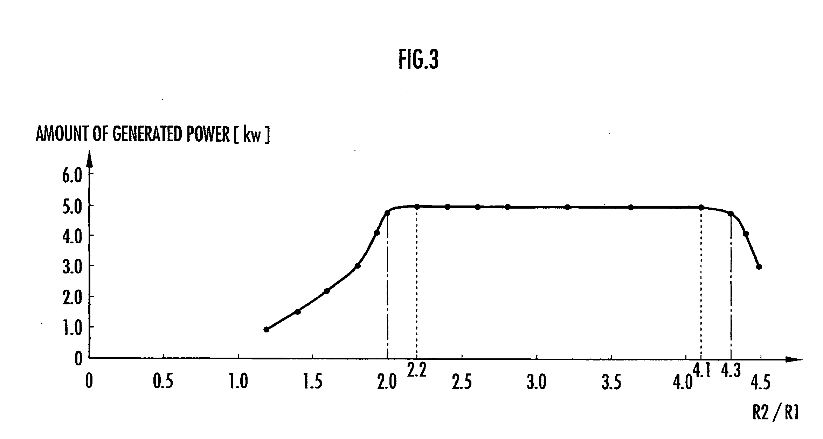

Figs. 1 and 2 are explanatory views of a structure of a wind power generator in accordance with an embodiment of the present invention, and Figs. 3 to 5 are explanatory views of an operation and an effect of the wind power generator in accordance with the embodiment of the present invention.

Best Mode for Carrying Out the Invention

A description will be given of an embodiment of a wind power generator in accordance with the present invention with reference to the accompanying drawings.

First, a description will be given of a structure of the wind power generator in accordance with the embodiment of the present invention with reference to Figs. 1 and 2.

The wind power generator shown in Fig. 1 is provided with an approximately cylindrical duct 10, a streamlined pencil body 20 coaxially installed with the duct 10, an impeller 30 structuring a front end portion of the pencil body 20 and capable of rotating around an axis of the duct 10 in an inner portion of the duct 10 on the basis of a force of a wind flowing in the inner portion of the duct 10, and a power generator 40 converting a rotational energy of the impeller 30 into an electric energy.

A cross sectional shape of a side wall of the duct 10 is formed in a wing-like shape. In the wing-like shape in the side cross-section of the duct 10, on the basis of an entire length x of a chord 106 extending to a rear edge 104 from a leading edge 102, a maximum wing thickness position 108 is positioned at 0.40x from a leading edge (nearer to the leading edge than a center of chord). Further, an opening diameter of a front end of the duct 10 is made smaller than an opening diameter of a rear end. Further, an outer diameter of the duct 10 is made approximately uniform at least in a rear portion of the duct 10. Further, a ratio of a maximum outer diameter R2 with respect to a minimum inner diameter R1 of the duct 10 (= R2/R1) is set to 2.5.

In this case, the cross sectional shape of the side wall of the duct 10 can employ the known wing-like shape such as NACA653-618 (9-0.5), NACA633-618, FA66-S-196V1 and the like.

An approximately annular flap plate 12 protruding in an outer diameter direction of the duct 10 is provided at a rear end portion of the duct 10. A ratio of a width of the flap plate 12 with respect to a rear end radius of the duct 10 is set to "0.10".

The pencil body 20 is installed such that a front end portion is positioned rearward from the front end portion of the duct 10, and a rear end portion is positioned forward from the rear end portion of the duct 10. Further, the pencil body 20 is fixed to the duct 10 via a post body 22 extending in an outer diameter direction of the pencil body 20.

The impeller 30 is provided with a plurality of vanes 32 protruding in an outer diameter direction. The vanes 32 are positioned within a range of a forward and backward displacement ratio 0.7 with respect to an entire length of the duct 10 on the basis of a position of a minimum inner diameter of the duct 10. Further, the vane 32 is formed by cutting an approximate oval approximately in parallel to a short axis into a shortened shape from an end in a long axial direction, as shown in Fig. 2. Further, a ratio of a length in a long axial direction of the vane 32 with respect to a long diameter of the approximate oval is set to "0.85".

Further, an interval between a front end portion of the vane 32 and an inner wall of the duct 10 in a diametrical direction of the duct 10 is set to an interval c shown by the following expression (1).

$$c = v \cdot \Delta t / Re \qquad (1)$$

in which reference symbol v denotes a wind speed in an axial direction of the duct 10, reference symbol $\Delta t$ denotes a time for which the wind flows through a near region of the vane 32, and reference numeral Re denotes a Reynolds number determined on the assumption that the characteristic length is the near region of the vane 32.

For example, on the assumption that the time Δt = 0.2 [s] in the case that the wind speed v = 14 [m/s], and Re = 200 are established, the interval c is set to 1.4 [cm].

A generated energy by the power generator 40 is supplied to the exterior via a lead 42 passing through the post body 22 and the duct 10.

A description will be given of an operation and an effect of the wind power generator having the structure mentioned above in accordance with the embodiment of the present invention with reference to Figs. 3 to 5.

In accordance with the wind power generator having the structure mentioned above, in the case that the wind flows toward the rear side from the front side of the duct 10, owing to the basis of the wing-like shape in the side cross-section of the duct 10, it is possible to generate a pressure reduction region 50 as shown by a hatched line in Fig. 1 while inhibiting a vortex from being generated from the rear portion of the duct 10 towards the rear side. Further, it is possible to increase a wind speed in the inner portion of the duct 10 owing to the pressure reduction region 50 drawing in the wind while solving a drawback that the wind flow from the front side of the duct 10 to the inner portion of the duct 10 is prevented by the vortex in the rear side of the duct 10.

Further, since the leading end portion of the pressure reduction region 50 is attracted to the rear end portion of the pencil body 20 as shown in Fig. 1, it is possible to inhibit a stagger of the front end portion of the pressure reduction region 50. Further, it is possible to inhibit a drawback that the pressure reduction region 50 disappears on the basis of the stagger of the front end portion of the pressure reduction region, during a period that the wind blows from the front side of the duct 10 toward the rear side. Further, it is possible to steadily maintain the pressure reduction region 50 at the rear side of the duct 10, and it is possible to secure an increase of the wind speed in the inner portion of the duct 10.

Fig. 3 shows a relation between a ratio between a maximum radius R2 of the duct 10 featuring the wing-like shape in the side cross-section of the duct 10 and a minimum radius R1, and an amount of generated power by the wind power generator. As is apparent from Fig. 3, in the case that the ratio falls within a range between 2.0 and 4.3, particularly in the case that the ratio falls within a range between 2.2 and 4.1, the amount of generated power becomes large. Accordingly, it is possible to improve a power generating efficiency by the wind power generator provided with the duct 10 in which the ratio is "2.5".

Further, it is possible to inhibit a collision in the rear side of the duct 10 between an inside wind (the wind in the inner side of the duct 10) and an outside wind (the wind in the outer side of the duct 10), by the flap plate 12. Accordingly, it is possible to inhibit a drawback that the flow of the inside wind is disturbed by an irregular flow of the outside wind, and the pressure reduction region 50 generated from the rear portion of the duct 10 towards the rear side disappears, whereby the power generating efficiency is lowered.

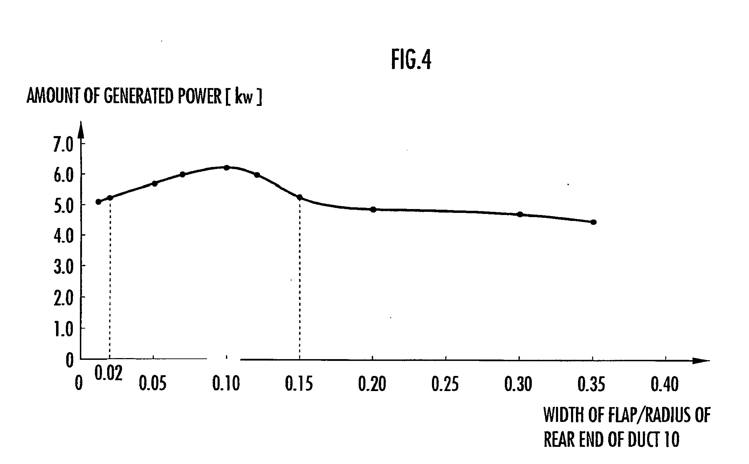

In this case, Fig. 4 shows a relation between a ratio between a width in a diametrical direction of the flap 12, which is a characterizing feature of the shape of the flap 12, and a radius in a rear end of the duct 10, and the amount of generated power by the wind power generator. As is apparent from Fig. 4, in the case that the ratio is within a range between 0.020 and 0.15, the amount of generated power becomes larger in comparison with the other cases. Accordingly, it is possible to improve a power generating efficiency by the wind power generator provided with the flap 12 in which the ratio is "0.10".

Further, the vane 32 of the impeller 30 is formed in the shape obtained by cutting the approximate oval at a position within a range falling between 0.13 and 0.18 times the entire length from the end in the long axial direction as shown in Fig. 2. Accordingly, it is possible to improve a power generating efficiency.

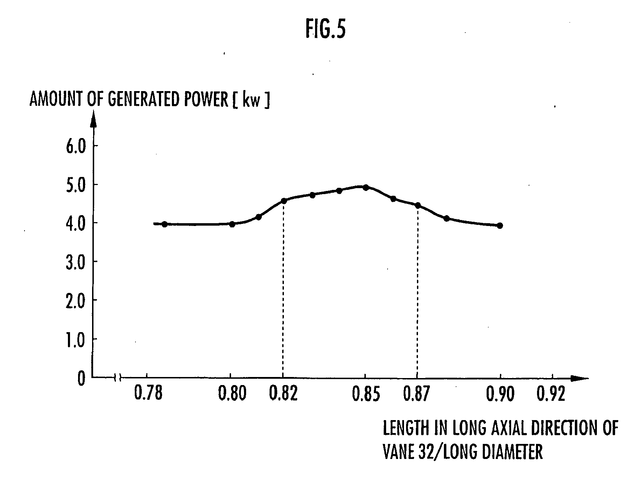

In this case, Fig. 5 show a relation between a ratio of the vane 32 with respect to the long diameter of the approximate oval, and the amount of generated power by the wind power generator. As is apparent from Fig. 5, in the case that the ratio is within a range between 0.82 and 0.87, the amount of generated power becomes larger in comparison with the other cases. Accordingly, it is possible to improve a power generating efficiency by the wind power generator provided with the vane 32 in which the ratio is "0.85".

As mentioned above, in accordance with the wind power generator corresponding to the embodiment of the present invention, it is possible to comprehensively improve a power generating efficiency by adjusting the wing-like shape in the side cross-section of the duct 10 (refer to Figs. 1 and 3), adjusting the layout of the pencil body 20, adjusting the width of the flap plate 12 (refer to Figs. 1 and 4), and adjusting the shape of the vane 32 (refer to Figs. 2 and 5).

In this case, in accordance with the other embodiment of the present invention, the wind power generator may be provided with a wind direction measuring means for measuring a wind direction, and a duct slope control means for controlling such that an angle of slope of a duct axis with respect to the wind direction measured by the wind direction measuring means becomes equal to or less than 10 degree.

In accordance with the other embodiment, it is possible to improve a power generating efficiency on the basis of the control of the angle of slope of the duct axis with respect to the wind direction.

**Claims**

1. A wind power generator, comprising:

an approximately cylindrical duct with the side cross-section thereof having a wing-like shape; a streamlined pencil body coaxially installed with the duct; an impeller constituting a part of the pencil body and capable of rotating about a duct axis in an inner portion of the duct by a force of wind flowing in the inner portion of the duct; and a power generator converting a rotational energy of the impeller into an electric energy; wherein a maximum wing thickness position is positioned nearer a leading edge than a center of a chord in the side cross-sectional wing-like shape of the duct, an opening diameter of a front end of the duct is made smaller than an opening diameter of a rear end, and an outer diameter of the duct is made approximately uniform at least in a rear portion of the duct, the pencil body is installed such that a front end portion is positioned rearward from a front end portion of the duct and a rear end portion is positioned forward from a rear end portion of the duct, and a ratio of a maximum outer diameter of the duct with respect to a minimum inner diameter of the duct is within a range between 2.0 and 4.3.

2. A wind power generator as claimed in claim 1, wherein the wind power generator is provided with an approximately annular flap plate protruding in an outer diameter direction of the duct from the rear end portion of the duct, and a ratio of a width of the flap plate with respect to the rear end radius of the duct is within a range between 0.020 and 0.15.

3. A wind power generator as claimed in claim 1 or 2, further comprising:

   a wind direction measuring means for measuring a wind direction; and
   a duct slope control means for controlling such that an angle of slope of a duct axis with respect to the wind direction measured by the wind direction measuring means becomes equal to or less than 10 degree.

4. A wind power generator as claimed in claim 1, 2 or 3, wherein a vane of the impeller is formed by cutting an approximate oval approximately in parallel to a short axis into a shape which is shortened from an end in a long axial direction, and a ratio of a length in the long axial direction of said vane with respect to a long diameter of the approximate oval is within a range between 0.82 and 0.87.

FIG.1

FIG.2

FIG.3

EP 1 640 605 A1

## FIG.4

AMOUNT OF GENERATED POWER [ kw ]

WIDTH OF FLAP/RADIUS OF
REAR END OF DUCT 10

EP 1 640 605 A1

# FIG.5

AMOUNT OF GENERATED POWER [ kw ]

Y-axis: 6.0, 5.0, 4.0, 3.0, 2.0, 1.0, 0

X-axis: 0.78, 0.80, 0.82, 0.85, 0.87, 0.90, 0.92

LENGTH IN LONG AXIAL DIRECTION OF VANE 32/LONG DIAMETER

## INTERNATIONAL SEARCH REPORT

| International application No. |
| --- |
| PCT/JP03/07474 |

**A. CLASSIFICATION OF SUBJECT MATTER**
    Int.Cl⁷  F03D1/04

According to International Patent Classification (IPC) or to both national classification and IPC

**B. FIELDS SEARCHED**

Minimum documentation searched (classification system followed by classification symbols)
    Int.Cl⁷  F03D1/04

Documentation searched other than minimum documentation to the extent that such documents are included in the fields searched

| | | | |
| --- | --- | --- | --- |
| Jitsuyo Shinan Koho | 1922–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2003-97415 A  (Kabushiki Kaisha Fujin Corp.), 03 April, 2003 (03.04.03), Par. Nos. [0010] to [0041]; Fig. 4 (Family: none) | 1,3 |
| Y | US 4720640 A  (Bjorn M.S. Anderson), 19 January, 1988 (19.01.88), Column 18, lines 20 to 28; Figs. 24 to 25 (Family: none) | 1,3 |
| A | US 4482290 A  (Kenneth M. Foreman), 13 November, 1984 (13.11.84), Column 2, lines 49 to 51; Fig. 2 (Family: none) | 2 |

[X] Further documents are listed in the continuation of Box C.　　[ ] See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 19 August, 2003 (19.08.03) | 02 September, 2003 (02.09.03) |

| Name and mailing address of the ISA/ | Authorized officer |
| --- | --- |
| Japanese Patent Office | |
| Facsimile No. | Telephone No. |

Form PCT/ISA/210 (second sheet) (July 1998)

## INTERNATIONAL SEARCH REPORT

| International application No. |
|---|
| PCT/JP03/07474 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2003-97416 A (Kabushiki Kaisha Fujin Corp.), 03 April, 2003 (03.04.03), Full text; Fig. 5 (Family: none) | 1-4 |
| A | JP 2003-28043 A (Kabushiki Kaisha Fujin Corp.), 03 April, 2003 (03.04.03), Full text; Fig. 1 (Family: none) | 1-4 |

Form PCT/ISA/210 (continuation of second sheet) (July 1998)